# EUROPÄISCHE PATENTANMELDUNG

(11) **EP 1 795 405 A2**
(43) Veröffentlichungstag der Anmeldung: **13.06.2007**
(21) Anmeldenummer: 06022599.2
(22) Anmeldetag: 30.10.2006
(51) Int. Cl.: B60R 21/34

(54) **Anordnung einer Frontklappe an einem Fahrzeug**

(30) Priorität: 08.12.2005 DE 102005058515
(71) Anmelder: Bayerische Motoren Werke Aktiengesellschaft, 80809 München (DE)
(72) Erfinder: Köstler, Ulrich, 85241 Hebertshausen (DE); Drexl, Thomas, 80801 München (DE); Tietel, Andreas, 81375 München (DE)

(57) **Zusammenfassung**

Die Anhebevorrichtung (1) zum Anheben einer Frontklappe besteht im wesentlichen aus einem in einem geschlossenen Hohlzylinder (2) geführten Kolben (3) mit einer axial aus dem Hohlzylinder (2) herausragenden Kolbenstange (4). Der Kolben (3) unterteilt dabei den Hohlraum im Hohlzylinder (2) in zwei Kammern (7,8). Durch einen Treibgaserzeuger (9) in einer der beiden Kammern (7) kann Treibgas in Abhängigkeit eines Signals der Sensoreinrichtung erzeugt werden, wodurch der Kolben (3) im Hohlzylinder (2) zum Anheben der Frontklappe verlagert wird. Die beiden Kammern (7,8) sind über zumindest einen Bypass (11) miteinander verbunden, durch den Gas von der einen in die andere Kammer (8) strömen kann. Die Kammer (8), in der nicht durch den Treibgaserzeuger (9) Treibgas erzeugt werden kann, weist zumindest ein Überdruckventil zur Umgebung auf.

## Beschreibung

Die Erfindung betrifft eine Anordnung einer Frontklappe an einem Fahrzeug nach dem Oberbegriff des Patentanspruchs 1.

Um bei einer Kollision eines Fußgängers oder Radfahrers mit einem Kraftfahrzeug das Ausmaß von Verletzungen insbesondere im Brust- und Kopfbereich zu minimieren, ist es allgemein bekannt, einen relativ großen Mindestabstand zwischen einer Frontklappe und einer steifen Unterstruktur des Fahrzeugs (Motor, Federbeinaufnahmen, etc.) vorzusehen, sodass ein ausreichender Deformationsweg der Frontklappe zur Verfügung steht, um den Aufprall des Fußgängers oder Radfahrers auf ein biomechanisch verträgliches Maß zu verzögern.

Wenn der dazu benötigte Mindestabstand zwischen geschlossener Frontklappe und der steifen Unterstruktur aus bauraumtechnischen Gründen nicht zur Verfügung steht, kann die Frontklappe aktiv zumindest in einem Bereich angehoben werden, um den Mindestabstand zu erzeugen, wenn ein Zusammenstoß des Fahrzeugs mit einem Fußgänger oder Radfahrer detektiert wird.

Aus der WO 2004/048159 A1 ist zum Schutz eines auf eine Frontklappe eines Fahrzeugs aufprallenden Fußgängers eine Anhebevorrichtung zum Anheben der Frontklappe bekannt, die einen Zylinder und zumindest einem darin teleskopisch geführten zylindrischen Kolben aufweist. Zur Anhebevorrichtung gehört ferner ein Gasgenerator, der im Falle einer Kollision des Fahrzeugs mit einem Fußgänger Gas erzeugen kann, sodass der Kolben teleskopisch aus dem Zylinder ausfährt und dabei die Frontklappe anhebt.

Ferner ist aus der DE 103 05 685 A1 eine als Kolben-Zylinder-Anordnung ausgebildete Anhebevorrichtung bekannt, die einen ein Treibgas erzeugenden Treibgaserzeuger zum Bewegen des Kolbens aufweist. Wenn der Kolben im Falle einer Kollision des Fahrzeugs mit einem Fußgänger durch das Treibgas ausgefahren wurde, baut die Anhebevorrichtung bei einer Rückstellbewegung des Kolbens eine strömungstechnisch erzeugte und sich über den Rückstellweg ändernde Kraft auf.

Aufgabe der Erfindung ist es, eine Anordnung einer Frontklappe an einem Fahrzeug mit einer Anhebevorrichtung zu schaffen, die im Falle einer Kollision des Fahrzeugs mit einem Fußgänger die Frontklappe zumindest in einem Bereich anhebt, wobei die Anhebevorrichtung nach dem Anheben eine gezielte Nachgiebigkeit der Frontklappe in allen Bereichen sicherstellt.

Diese Aufgabe wird mit einer Anordnung einer Frontklappe an einem Fahrzeug mit den Merkmalen des Patentanspruchs 1 gelöst.

Erfindungsgemäß besteht die Anhebevorrichtung im wesentlichen aus einem in einem geschlossenen Zylinder geführten Kolben mit einer axial aus dem Zylinder herausragenden Kolbenstange, die mit dem Kolben verbunden ist. Der Kolben unterteilt den Hohlraum im Zylinder in zwei Kammern. Durch einen Treibgaserzeuger in einer der beiden Kammern kann Treibgas in Abhängigkeit eines Signals der Sensoreinrichtung in der Kammer erzeugt werden, wodurch der Kolben im Zylinder verlagert wird, und so über die Kolbenstange die Frontklappe zumindest in einem Bereich anhebt. Die beiden Kammern sind über zumindest einen Bypass miteinander verbunden, durch den Gas von der einen in die andere Kammer strömen kann. Die Kammer, in der nicht durch den Treibgaserzeuger Treibgas erzeugt werden kann, weist zumindest ein Überdruckventil zur Umgebung auf.

Wenn nun die Sensoreinrichtung eine Kollision des Fahrzeugs mit einem Fußgänger oder Radfahrer detektiert, wird der Treibgaserzeuger angesteuert, der daraufhin schlagartig Treibgas erzeugt. Aufgrund des dadurch in der Kammer entstehenden Drucks wird der Kolben mit der Kolbenstange bewegt. Ein Teil des Treibgas strömt durch den zumindest einen Bypass in die andere Kammer und baut dort einen Gegendruck auf, der durch das Überdruckventil begrenzt ist. So kann durch die Größe des zumindest einen Bypasses und die Auslegung des zumindest einen Überdruckventils die Geschwindigkeit des Kolbens mit der Kolbenstange gezielt gesteuert werden.

Nachdem die Frontklappe durch die Anhebevorrichtung angehoben wurde, herrscht zwischen der Frontklappe und der steifen Unterstruktur der benötigte Mindestabstand. Allerdings muss die Frontklappe zumindest während des Aufpralls des Fußgängers mit einer gewissen Kraft in der angehobenen Stellung gehalten werden, da ansonsten der aufprallende Fußgänger die angehobene Frontklappe sofort wieder herunterdrücken würde, und anschließend nur geringfügig abgebremst mit der Frontklappe auf die steife Unterstruktur aufprallen würde.

Damit sich die Frontklappe aus der angehobenen Stellung wieder absenken kann, muss die Kolbenstange wieder in den Zylinder geschoben werden, und damit der Kolben im Zylinder verschoben werden. Dabei muss Gas aus der einen Kammer in die andere Kammer durch den zumindest einen Bypass strömen, damit nicht in der einen Kammer ein Unterdruck und in der anderen Kammer ein Überdruck entsteht, der einer Rückverlagerung des Kolbens entgegen steht. Durch die entsprechende Gestaltung des zumindest einen Bypasses kann die Durchströmmenge und damit die Geschwindigkeit, mit der der Kolben wieder zurückverlagert werden kann, gesteuert werden. Bei einer entsprechend niedrigen Geschwindigkeit ist die Frontklappe während des Aufpralls des Fußgängers praktisch noch in ihrer vollständig angehobenen Stellung und kann sich auch nicht schlagartig absenken. So ist der erforderliche Deformationsweg der Frontklappe während des gesamten Aufpralls des Fußgängers sichergestellt.

Die Anhebevorrichtung kann größtenteils aus Bauteilen bestehen, die normalerweise bei einer Gasdruckfeder verwendet werden. So kann beispielsweise der Zylinder und der Kolben mit der Kolbenstange von einer gängigen Gasdruckfeder für die Anhebevorrichtung verwendet werden. Es können also Bauteile aus einer Großserienproduktion genutzt werden, die entsprechend kostengünstig sind. Auch können weitere Teile einer Gasdruckfeder zur Dämpfung verwendet werden, um Schwingungen der Frontklappe beim Anheben zu vermeiden oder zumindest gering zu halten.

Vorteilhafterweise ist der Treibgaserzeuger so in der einen Kammer im Zylinder angebracht, dass er leicht ausgewechselt werden kann. Bei der erfindungsgemäßen Anordnung besteht die Gefahr, dass die Sensoreinrichtung scheinbar einen Aufprall eines Fußgängers detektiert, in Wirklichkeit aber nur ein Fußball gegen die Sensoreinrichtung geprallt ist, oder beim Einparken versehentlich eine Mülltonne, oder ähnliches übersehen wurde. Dadurch kann es zu einer Fehlauslösung der Anhebevorrichtung kommen. Damit die Reparaturkosten nach einer solchen Fehlauslösung für den Fahrzeugeigentümer möglichst gering sind, ist der Treibgaserzeuger leicht auswechselbar. Dazu kann der Treibgaserzeuger angeschraubt oder angeclipst sein.

Weitere vorteilhafte Ausgestaltungen sind Gegenstand von Unteransprüchen.

In der Zeichnung ist ein Ausführungsbeispiel der Erfindung dargestellt, anhand dessen die Erfindung im folgenden näher beschrieben wird. Die einzelnen Figuren zeigen in schematischer Darstellungsweise:
- Fig. 1: einen Schnitt durch eine Anhebevorrichtung zum Anheben einer Frontklappe eines Fahrzeugs im Falle einer Kollision des Fahrzeugs mit einem Fußgänger und
- Fig. 2: einen Schnitt entlang der Linie A - A durch die in Fig. 1 gezeigte AnHebevorrichtung.

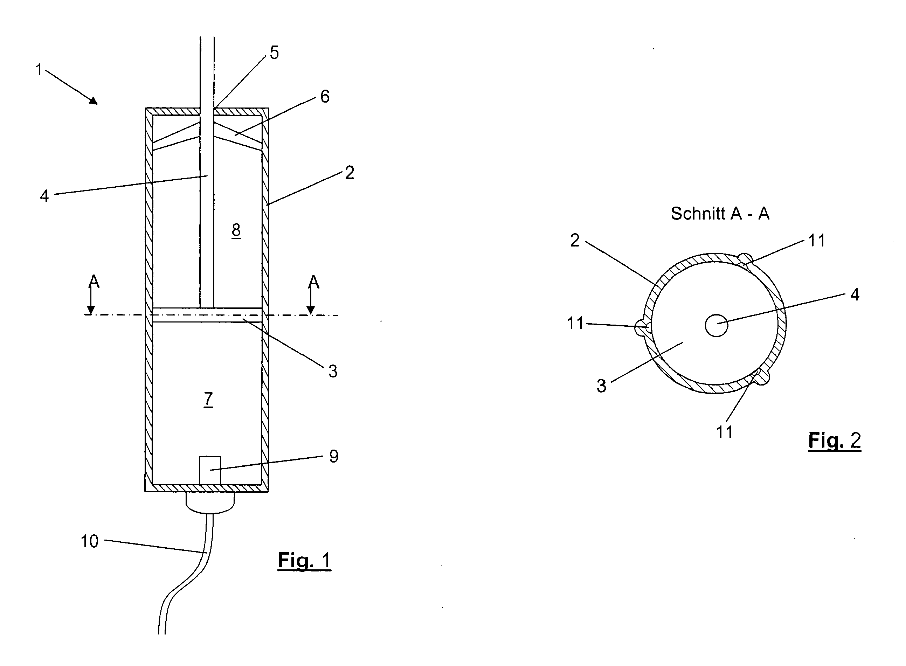

Die in Fig. 1 gezeigte Anhebevorrichtung 1 weist einen geschlossenen Hohlzylinder 2 auf, in dem ein Kolben 3 axial verlagerbar geführt ist. Mit dem Kolben 3 ist eine Kolbenstange 4 verbunden, die axial aus einer Öffnung 5 in der oberen Stirnseite des Hohlzylinders 2 herausragt. Unmittelbar unterhalb der Öffnung 5 befindet sich eine umlaufende Dichtung 6, die die Kolbenstange 4 zur Innenwand des Hohlzylinders 2 abdichtet. Zugleich dient die Dichtung 6 auch als zusätzliche Führung für die Kolbenstange 4. Das nicht dargestellte freie Ende der Kolbenstange 4 endet kurz unterhalb der ebenfalls nicht dargestellten Frontklappe des Fahrzeugs. Der Kolben 3 unterteilt den Hohlraum im Hohlzylinder 2 in eine untere und eine obere Kammer 7 und 8. An der unteren Stirnseite des Hohlzylinders 2 ist in der unteren Kammer 7 ein pyrotechnischer Gasgenerator 9 lösbar angebracht, der über eine elektrische Leitung 10 mit einer Fahrzeugelektronik des Fahrzeugs verbunden ist.

Die Dichtung 6 dient zugleich als Überdruckventil, das heißt, dass die Dichtung 6 ab einem gewissen Überdruck in der oberen Kammer 8 gegenüber dem Umgebungsdruck nicht mehr vollständig abdichtet. Die Öffnung 5 ist dabei so groß, dass neben der Kolbenstange 4 auch Gase durch die Öffnung ungehindert durchtreten können, sodass auch zwischen der Öffnung 5 und der Dichtung 6 Umgebungsdruck herrscht. Dies ist eine besonders einfache und damit kostengünstige Möglichkeit, ein Überdruckventil zu realisieren.

In axialer Richtung erstrecken sich auf der Innenseite des Mantels des Hohlzylinders 2 drei umlaufend gleichmäßig verteilte Nuten 11, die im Schnitt A - A in Fig. 2 gut zu sehen sind. Die Nuten 11 erstrecken sich über die gesamte Höhe des Hohlzylinders 2 und wurden bei der Fertigung des Hohlzylinders 2 eingeprägt.

Wenn nun eine Sensoreinrichtung eine Kollision des Fahrzeugs mit einem Fußgänger oder Radfahrer detektiert, wird durch die elektrische Leitung 10 der pyrotechnische Gasgenerator 9 angesteuert. Dieser erzeugt daraufhin schlagartig viel Treibgas und damit einen Überdruck in der unteren Kammer 7. Dadurch verlagert sich der Kolben 3 mit der Kolbenstange 4 nach oben. Dadurch entsteht in der oberen Kammer 8 ein Gegendruck, der aber aufgrund der als Überdruckventil dienenden Dichtung 6 ein definiertes Maß nicht überschreitet. Zusätzlich strömt ein Teil des erzeugten Treibgases durch die als Bypass dienenden Nuten 11 aus der unteren Kammer 7 in die obere Kammer 8 und trägt dort ebenfalls zu dem Gegendruck bei. Aufgrund des Gegendrucks in der oberen Kammer 8 ist die Geschwindigkeit, mit der der Kolben 3 nach oben verlagert wird, begrenzt. Diese Geschwindigkeit wird beeinflusst durch die Größe und die Form der Nuten 11 und durch die Dimensionierung der als Überdruckventil dienenden Dichtung 6. Durch das nach oben Verlagern des Kolbens 3 wird auch die damit verbundene Kolbenstange 4 nach oben geschoben, die dann wiederum die Frontklappe anhebt.

Nachdem der Kolben 3 vollständig nach oben verlagert wurde und damit die Frontklappe ausreichend weit angehoben wurde, kann sich der Kolben 3 wieder nach unten zurückverlagern. Dabei muss aber Gas aus der unteren Kammer 7 durch die als Bypass dienenden Nuten 11 in die obere Kammer 8 strömen, um den erforderlichen Druckausgleich sicherzustellen. Die Nuten 11 weisen eine so geringe Querschnittsfläche auf, dass das Gas nur langsam von der unteren Kammer 7 in die obere Kammer 8 strömen kann. Dadurch kann sich der Kolben 3 nur langsam wieder nach unten zurückverlagern, sodass während des Aufpralls die Frontklappe nur in geringem Maße die Kolbenstange 4 wieder nach unten drücken kann. Nach einer gewissen Zeit, beispielsweise zwei bis drei Minuten, geht der Kolben 3 von alleine durch das Klappengewicht wieder annähernd in seine untere Stellung zurück bzw. kann leicht wieder zurückgedrückt werden. Dadurch ist selbst bei Fehlauslösung eine Weiterfahrt möglich.

Aus Sicherheitsgründen ist um den Hohlzylinder 2 ein hier nicht dargestellter Schutzmantel angebracht, der auch die aus dem Hohlzylinder 2 herausragende Kolbenstange 4 größtenteils abdeckt. Dadurch reduziert sich die Verletzungsgefahr, wenn es beim Einbau der Anhebevorrichtung 1 im Fahrzeug versehentlich zu einer Zündung des pyrotechnischen Gasgenerators 9 kommt.

Die Anhebevorrichtung 1 ähnelt in vieler Hinsicht einer gängigen Gasdruckfeder. Entsprechend können auch viele Einzelteile für die Anhebevorrichtung 1 verwendet werden, die ansonsten für eine Gasdruckfeder verwendet werden, sodass eine solche Anhebevorrichtung 1 kostengünstig herstellbar ist. Allerdings weist die Anhebevorrichtung 1 wie, auch eine Gasdruckfeder ein temperaturabhängiges Verhalten auf, wenn keine besonderen Maßnahmen ergriffen werden. Diese temperaturabhängigen Effekte können vermieden werden, wenn Materialen mit unterschiedlichen Wärmeausdehnungskoeffizienten zum Einsatz kommen. So kann im Sommer die höhere Energie des pyrotechnischen Gasgenerators 9 durch einen höheren Gegendruck abgebaut werden.

## Patentansprüche

1. Anordnung einer Frontklappe an einem Fahrzeug, mit zumindest einer Anhebevorrichtung (1), durch die bei einer von einer Sensoreinrichtung detektierten Kollision des Fahrzeugs mit einem Fußgänger oder Radfahrer die Frontklappe gegenüber der geschlossenen Position zumindest in einem Bereich anhebbar ist, wobei die Anhebevorrichtung (1) einen in einem geschlossenen Hohlzylinder (2) geführten Kolben (3) mit einer axial aus dem Hohlzylinder (2) herausragenden Kolbenstange (4) aufweist, wobei der Kolben (3) den Hohlraum im Hohlzylinder (2) in zwei Kammern (7, 8) unterteilt, und wobei durch einen Treibgaserzeuger (9) in einer der beiden Kammern (7) Treibgas in Abhängigkeit eines Signals der Sensoreinrichtung erzeugt werden kann, wodurch der Kolben (3) im Hohlzylinder (2) zum Anheben der Frontklappe verlagert wird, **dadurch gekennzeichnet, dass** die beiden Kammern (7, 8) über zumindest einen Bypass (11) miteinander verbunden sind, durch den Gas von der einen in die andere Kammer (8) strömen kann, und die andere Kammer (8) zumindest ein Überdruckventil zur Umgebung aufweist, in der nicht durch den Treibgaserzeuger (9) Treibgas erzeugt werden kann.

2. Anordnung nach Anspruch 1, **dadurch gekennzeichnet, dass** die Kolbenstange (4) durch eine Öffnung (5) in einer Stirnseite des Hohlzylinders (2) herausragt, wobei zwischen Kolbenstange (4) und Öffnung (5) ein Spalt ist, durch den Gase durchtreten können.

3. Anordnung nach Anspruch 2, **dadurch gekennzeichnet, dass** die an die Öffnung (5) angrenzende Kammer (8) im Hohlzylinder (2) mit einer Dichtung (6) gegenüber der Öffnung (5) abgedichtet ist.

4. Anordnung nach Anspruch 3, **dadurch gekennzeichnet, dass** die Dichtung (6) zugleich als Überdruckventil dient, d. h. dass die Dichtung (6) ab einem gewissen Überdruck in der Kammer (8) gegenüber der Umgebung nicht mehr vollständig abdichtet.

5. Anordnung nach einem der vorhergehenden Ansprüche, **dadurch gekennzeichnet, dass** der Treibgaserzeuger (9) so im Hohlzylinder (2) angebracht ist, dass er leicht ausgewechselt werden kann.

6. Anordnung nach einem der vorhergehenden Ansprüche, **dadurch gekennzeichnet, dass** sich auf der Innenseite des Mantels des Hohlzylinders (2) zumindest eine nach außen ragende Nut (11) in axialer Richtung befindet, die als Bypass dient.

7. Anordnung nach einem der vorhergehenden Ansprüche, **dadurch gekennzeichnet, dass** am Hohlzylinder (2) ein Schutzmantel angebracht ist, der die aus dem Hohlzylinder (2) herausragende Kolbenstange (4) zumindest teilweise abdeckt.
